# EUROPEAN PATENT APPLICATION

(11) **EP 3 725 740 A1**
(43) Date of publication of application: **21.10.2020**
(21) Application number: 17934882.6
(22) Date of filing: 13.12.2017
(51) Int. Cl.: C01B 32/16, C01B 32/158, C09D 5/16

(54) **NANOSTRUCTURED PAINT FOR REDUCING MICROBIAL CORROSION**

(71) Applicant: Universidad Técnica Federico Santa María, Valparaiso (CL)
(72) Inventor: PARRA GONZÁLEZ, Carolina Ivon, 1680 Valparaíso (CL); FUENTES, Raúl, 1680 Valparaíso (CL); HENRÍQUEZ, Ricardo, 1680 Valparaíso (CL); DEL CAMPO, Valeria, 1680 Valparaíso (CL)
(74) Representative: Herrero & Asociados, S.L.
(86) International application number: PCT/CL2017/050074
(87) International publication number: WO 2019/113717

(57) **Abstract**

The present invention relates to the field of nanotechnology, more particularly to a paint or coating composition that allows microbial corrosion in metal surfaces to be suppressed. The composition comprises a paint base formed by ethylene glycol monobutyl ether and nitrocellulose into which carbon nanotubes have been incorporated. Also disclosed is a method for preparing the paint or coating composition, a method for preventing or eliminating biocorrosion in surfaces exposed to aqueous environments, and lastly, the use of the paint or coating composition.

## Description

### FIELD OF THE INVENTION

The present invention refers to the field of nanotechnology, more particularly to a coating or paint that allows suppressing microbial corrosion on metal surfaces, which has been developed based on nanomaterials and which has high efficiency.

### BACKGROUND

Microbial corrosion (or bio-corrosion) is a serious problem that accelerates the process of mechanical failure of metals in a wide range of environments in contact with microorganisms, from hydrocarbon and water transport lines (fresh and salt) to machinery for medical devices. Bacterial biofilms formation under aerobic and anaerobic conditions directly influence corrosion, abruptly accelerating the typical rate of surface damage up to a thousand times, known as microbial corrosion (Li K., Whitfield M., Van Vliet K. J., Corrosion Reviews 2013, 31 (3-6), 73-8). In particular, an important biocorrosion has been observed in mining activity in the pipelines used to transfer large volumes of water that are used in production processes. This translates into large operational losses, mainly due to the need to stop the mining work to carry out the repair or replacement of the systems. This biocorrosion extends to the extraction, storage, and water transport processes.

Biocorrosion affects not only the mining industry but also gas transportation, shipbuilding, thermal power generation, and petrochemicals, among others.

Conservative estimates have allowed quantifying the direct cost of biocorrosion between 50 and 250 billion dollars a year in the United States, while in other countries it generally reaches between 1-5% of GDP (Li K. et al, Corrosion Reviews 2013, 31 (3-6), 73-84; Keevil C.W., Water Sci. Technol 2004, 49 (2), 91-98; Kurissery R. et al, Antibacterial Metals - A Viable Solution for Bacterial Attachment and Microbiologically Influenced Corrosion, Materials Transactions, Vol. 46, No. 7 (2005), 1636-1645).

This cost includes maintenance and capital cost for metal structures. In addition, it is estimated that the indirect costs to the user due to traffic delays and lost productivity is more than 10 times the direct cost of corrosion. Although biocorrosion causes 50% of the total cost of corrosion (Fleming, H.C. Economical and technical overview; In Microbially Influenced Corrosion of Materials, Springer-Verlag: New York, 1996, 6-14), prevention and effective control of this phenomenon are poorly understood. While corrosion typically occurs under acidic conditions, biocorrosion is more complex, as microbes are adept at inducing corrosion, even at room temperature and under neutral pH conditions (Videla H., Herrera L.K., Int Biodeterior Biodegradation 2009, 63(7), 896-900).

Current methods to avoid biocorrosion include physical (such as washing) and chemical methods. Among the chemical methods the use of biocides, which permanently release antibacterial substances that kill organisms that tend to settle on a surface, is very popular. However, these products wear out with use and continually release chemicals into the environment that alter the ecosystem for other living organisms (Beech W.B., Sunner J., Curr. Opin. Biotechnol. 2004, 15 (3), 181-186). Additionally, about 100 to 1000 times more biocide is required to remove a biofilm of bacteria (bacteria + polysaccharide matrix) than to kill bacteria on a surface (K. Smith, I. Hunter, Efficacy of common hospital biocides with biofilms of multi-drug resistant clinical isolates, J. Med Microbiol (2008) vol. 57, no. 8, 966-973).

Another commonly used strategy in mining is the use of protective epoxy coatings to isolate metals from the environment. (Fleming, H.C., Economical and technical overview; In Microbially Influenced Corrosion of Materials, Springer-Verlag: New York, 1996, 6-14). However, even the highest performance coatings offer only a temporary solution due to their long-term deterioration, increasing the roughness and eventual fracture that occurs in materials with wear over time (Zhang W. et al, Scientific Reports 2014, 4, 4097).

On the other hand, within the field of nanotechnology, carbon nanotubes (CNT) are one of the most promising elements for the development of new materials of all kinds: construction, structural, and functional. Nanoscale reinforcements using these nanomaterials with unbeatable mechanical and thermal performances open endless engineering applications (Coleman, Jonathan N., et al, "Small but strong: a review of the mechanical properties of carbon nanotube-polymer composites." Carbon 44.9 (2006): 1624-1652; De Voider, Michael FL, et al, "Carbon nanotubes: present and future commercial applications" Science 339.6119 (2013): 535-539).

### DESCRIPTION OF THE ESTATE OF THE ART

The use of nanotechnology to develop new products with better properties is raising great expectations for its potential to lead to radical innovations that can create new market niches.

Many of the bactericidal coating type nanotechnology products that have been developed so far are made from metal nanoparticles of materials that are bactericidal by itself, such as silver and copper.

The state of the art describes some types of paints or coatings with some type of component that is present in nanometric size.

As part of the state of the art is the publication of the patent CN106221343 ("Nanoscale weather-proof painting gouache paint and preparation method thereof, Bingxin Li, 14-12-2016) describing a type of paint (gouache) with high covering power and high resistance to weathering, which includes nano titanium oxide. In this paint, the role of titanium oxide as nanoparticles is to improve the coverage of the paint, and not to provide bactericidal properties to it.

In a similar manner, publication CN106189634 ("Waterborne undercoat-topcoat integrated paint applied to type-25 passenger trains", Jiang Yong *et al,* 07-12-2016) describes a quick-drying, water-based paint with excellent chemical resistance, comprising nano barium sulfate among its components. However, antibacterial properties for the paint are not described.

In other publications, it has been disclosed that the bactericidal effect of the paint is given by the incorporation of a specifically bactericidal compound and not by the inclusion of nanoparticles in its composition. Such is the case of the publication CN106336755 ("Transparent matt water-base finish-coat paint without extinction powder", Yang Shuming, 18-01-2017) disclosing a clear matte finish paint that includes a bactericidal compound.

Lastly, the prior art discloses paints including nanoparticles, which do not present bactericidal properties *per se,* but where these nanoparticles are used as a means for the biocidal compounds. Such is the case of publication EP1856215 ("Method and use of nanoparticles to bind biocides in paints", Nyden Magnus, 21-11-2007) describing a paint that includes nano-sized metals allowing the biocidal molecule (imidazole) to anchor.

### OBJECTIVE OF THE INVENTION

Taking into consideration the foregoing, the objective of the present invention is to provide a coating composition, such as paint, that can be used on surfaces that remain in contact with aqueous environments, with a biocidal action, and that in turn, does not release chemical compounds that could be harmful to other living things in the environment.

### SUMMARY OF THE INVENTION

The present invention refers to a coating composition or water-resistant paint having anti-biocorrosion performance developed based on nanomaterials.

This coating or pain comprises carbon nanotubes and has a high efficiency to protect metals from biocorrosion caused by microbial biofilms.

The developed coating or paint has a biocidal action when the microorganisms come into contact with it, without releasing chemical compounds that could be harmful to other living beings.

### BRIEF DESCRIPTION OF THE FIGURES

Figure 1: It shows the application of the paint on a steel plate.
Figure 2: corresponds to a graph showing the amount of ions released from copper, steel, and nickel sheets, due to biocorrosion after 48 hours of exposure to bacterial cultures.
Figure 3A: it corresponds to a cell viability test on uncoated steel (Sample D, control), steel coated with a paint without carbon nanotubes (Sample E), and steel coated or painted with carbon nanotubes according to the invention (Sample F).
Figure 3B: shows a cell viability graph for samples D, E, and F.
Figure 4: corresponds to SEM images (scanning electron microscopy) showing (a) the steel surface covered only with the base of the paint and (b) the biofilm formed by cultures of E. *coli* on it.
Figure 5: Imágenes SEM muestran la superficie de acero cubierta con pintura con nanotubos de carbono según la invención (a) y los cultivos de E. *coli* tras su muerte por interacción con la superficie pintada (b).

### DETAILED DESCRIPTION OF THE INVENTION

The present invention relates to a biocidal paint or coating composition comprising the following components:
- Carbon nanotubes;
- ethylene glycol monobutyl ether (Butyl cellosolve®); and
- nitrocellulose (cellulose nitrate).

Likewise, the process of obtaining said coating or paint; the use of said coating to prevent and/or decrease biocorrosion of surfaces that are exposed to aqueous media; and a procedure to prevent and/or eliminate biocorrosion on surfaces exposed to aqueous media are disclosed.

Each of the components of the coating or paint are described in more detail below.
- Carbon nanotubes correspond to multiple wall type carbon nanotubes (MWCNTs). These are synthesized by the chemical vapor deposition method using ethylene as carbon precursor gas.
- The compound ethylene glycol monobutyl ether, known for its trademark Butyl cellosolve®, it is a colorless, water-soluble liquid that is used as a base in the manufacture of paints and coatings.
- Nitrocellulose is a fast-drying, highly soluble, biodegradable resin widely used in the manufacture of waterproof paints. The molecular weight of nitrocellulose is 504.3 g / mol.

In a preferred embodiment of the invention, the composition of the coating or paint comprises:
- Nanotubos de carbono entre 5 y 10% peso/volumen de la base monobutil etilenglicol éter; y
- Nitrocellulose with a concentration between 5 and 10% volume/volume of the base of the composition.

The process of preparing the coating or paint comprises the following steps:
a) Preparation of the carbon nanotubes; and
b) Incorporation of the carbon nanotubes in the composition.

In another embodiment of the invention, the preparation of the coating comprises the following steps:
A) Preparation of carbon nanotubes:
   i) Preparation of the catalyst for the synthesis of nanotubes. Carbon nanotubes require a catalyst powder for their growth, which is composed of a porous oxide matrix in which metallic nanoparticles are embedded, which serve as nucleation centers for their synthesis. This embedding is accomplished through a calcination process. The catalyst powder necessary for the growth of nanotubes is made of alumina (Al₂O₃), hydrated iron oxalate (Fe₂(C₂O₄)x5H₂O), and hydrated cobalt acetate (Co(C₂H₃O₂)₂x4H₂O). The ratio between the weights of the Fe, Co, and Al₂O₃ is comprised between 1:1:10 and 2:5:10, preferably between 2:2:10 and 2:4:10. Calcination temperature should be between 600°C y 750°C.
   ii) Carbon nanotube growth. The growth of multiple-walled nanotubes (MWCNTs) is performed by chemical vapor deposition (CVD), and is carried out at temperatures between 700 °C and 800 °C, using ethylene and argon in flows between 100 and 500 sccm.
B) Incorporation of the carbon nanotubes in the coating or paint composition:
   i) Dispersion of carbon nanotubes. The MWCNTs are dispersed using ultrasound directly at the base of the paint, that is, in the solution of monobutyl ethylene glycol ether (Butyl cellosolve®) using a frequency of 20 kHz to guarantee a homogeneous distribution and the absence of agglomeration of nanotubes. Dispersion times are between 15 to 60 minutes.
   iii) After dispersion, nitrocellulose is incorporated into the solution with MWCNTs.

In a further embodiment of the invention, a method for preventing or reducing biocorrosion on a surface by means of the following steps is disclosed:
i) apply the coating or paint on the surface to protect;
ii) dry the surface at room temperature for 4 hours or at 80 °C for 5 minutes.

### EXAMPLE OF APPLICATION

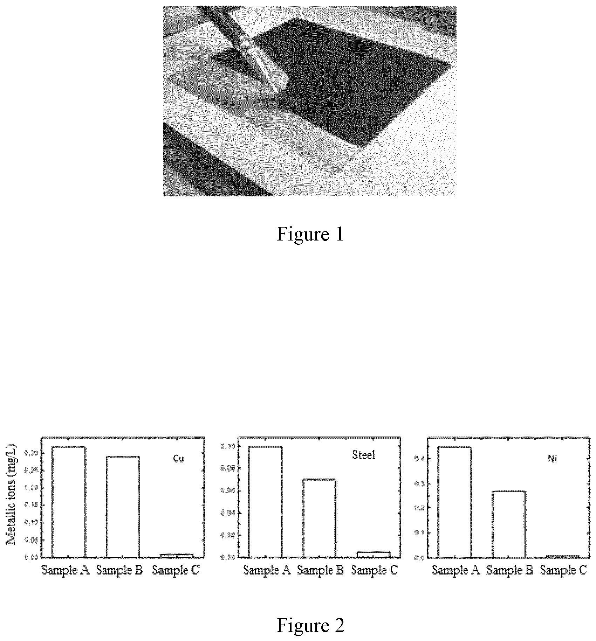

To evaluate the efficiency of the biocidal coating or paint, the 5% weight/volume preparation of nanotubes/ethylene glycol monobutyl ether dispersed for 30 minutes was used to then add 5% volume/volume of nitrocellulose. The paint was applied with a brush on the surface of metal sheets, as shown in Figure 1.

The performance of the coating or paint to suppress microbial corrosion was evaluated on copper, nickel, and steel sheets. For this, bacterial cultures at high concentrations (1x10⁸ CFU) and exposure times between 24 and 72 hours were used. The bacteria used were from the Escherichia coli MG1655 strain.

### EVALUATION OF THE RESULTS

The leaching or dissolution of metals due to biocorrosion with and without coating or paint was quantified by ICP-MS (Inductively Coupled Plasma Mass Spectrometry). This test allows quantifying the number of metal ions released from the surfaces to the medium in which they are found. As shown in Figure 2:
- Sample A: corresponds to control samples, which are those metallic surfaces without coating or pain in their surfaces.
- Sample B: corresponds to those metallic samples that were coated only with the paint base without the carbon nanotubes, i.e., with ethylene glycol monobutyl ether (butyl cellosolve®) and nitrocellulose.
- Sample C: corresponds to those metallic samples that were coated with paint comprising carbon nanotubes, according to the present invention.

Table 1 shows the obtained results, and Figure 2 shows the graphics derived from these results.

**Table 1: Concentration of metallic ions released from the surface to the medium in which they are found.**

| | **Ni ions (mg/L) from Ni sheet** | **Cu Ions (mg/L) from Cu sheet** | **Ni Ions (mg/L) from steel sheet** |
|---|---|---|---|
| **Sample A** | 0.448 | 0.318 | 0.099 |
| **Sample B** | 0274 | 0.291 | 0.070 |
| **Sample C** | 0.005 | 0.015 | 0.005 |

From the results obtained, it is possible to deduce that the control samples exposed to the biofilms show metal ion release to the medium.

On the contrary, the metal samples coated with the coating or paint according to the invention show absence of released metal ions, which reveals the ability of this coating or paint to protect the metals by preventing their microbial corrosion.

This study concludes that the coating or paint according to the invention only has a protective effect when carbon nanotubes are included in its composition.

To explore the response of paint to biological environments and its ability to prevent microbial corrosion of metals, cultures of *Escherichia coli* MG1655 were used, which have been reported to cause microbial corrosion of metals (Nan, L., et al, Microbiological influenced corrosion resistance characteristics of 304L-Cu stainless steel against Escherichia coli. Mat. Sci. Eng. C Mater. Biol. Appl. 2015, 48, 228-234; Javed, M.A. et al, Inhibition or acceleration: bacterial test media can determine the course of microbiologically influenced corrosion. Corros. Sci. 2014, 86, 149-158).

Bacterial cultures were grown to the pre-stationary growth phase in a low ionic strength medium containing meat extract (5 g/L) and yeast extract (5 g/L). The bacterial cultures were concentrated by centrifugation (5000 g, 5 min), washed three times with Milli-Q water, and finally re-suspended until turbidity of 3.0 to 600 nm. The turbidity of this stock dispersion is equivalent to a bacterial concentration of 1x10⁸ CFU/mL (colony-forming units per milliliter). This high bacterial concentration was chosen to ensure that the paint response is robust enough, even for large numbers of bacteria. Milli-Q water was used as a dispersant to prevent bacterial duplication and the next accumulation of mineral crystals that can interfere with microscopic image collection or cause unwanted chemical reactions with samples.

Samples A, B, and C of each metal (Cu, steel, and Ni) were immersed in the bacterial cultures described above. After 24 hours, the cultures were recovered, poured into 2.5 mL of 15 µM EDTA solution (pH 10) and centrifuged at 5,000 g for 10 minutes. The supernatant was recovered and the total concentration of metal ions listed in Table 1 was quantified by ICP-MS.

Additionally, cell viability (inverse to cell death) was monitored to assess the antibacterial activity of the coating or paint.

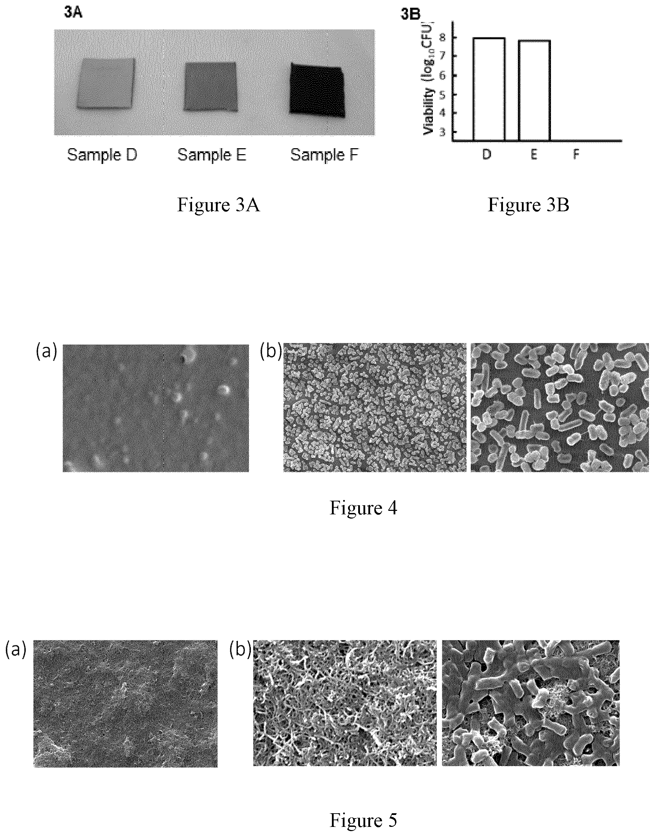

As seen in Figure 3A, cell viability was evaluated in 3 types of samples:
- Sample D: corresponds to the steel sample with paint.
- Sample E: corresponds to the steel sample painted with the base of the paint without nanotubes.
- Sample F: corresponds to the steel sample painted with the coating comprising carbon nanotubes according to the invention.

A volume (100 µL) of E. *coli* MG1655 stock dispersion was placed on each sample surface in order to obtain a final bacterial density of 60 µL / cm².

The "Sample plus bacteria" systems were incubated at 37 °C for 24 hours in a humidity chamber to prevent evaporation. Once this incubation period was complete, the bacteria were recovered with 3 volumes of Milli-Q water using a standard micropipette. Cell viability at 0 hours and 24 hours was determined using the microdot methodology (Nan, L., et al, Microbiological influenced corrosion resistance characteristics of a 304L-Cu stainless steel against Escherichia coli. Mat. Sci. Eng. C Mater. Biol. Appl. 2015, 48, 228-234).

The results of the cell viability test performed in the three samples are summarized in Table 2 and are graphed in Figure 3B.

**Table 2: Cell viability in three samples.**

| | **CFU (24 hours)** |
|---|---|
| **Sample D** | 1x10⁸ |
| **Sample E** | 1x10⁷ |
| **Sample F** | 0 |

Figure 4 shows a series of scanning electron microscopy (SEM) images showing the surface of the metallic sheet covered with the base of the paint (ethylene glycol monobutyl ether + nitrocellulose without CNTs) (see Figure 4(a)) and the appearance of *E. coli* cell cultures that were exposed to this coated metal (Figure 4 (b)).

The images distinguish intact bacteria, without damage to their cell wall, and with signs of reproduction (longer bacteria). These results confirm what was seen in Figure 3B, that is, the base by itself (Sample E) does not present a biocidal action.

The carbon nanotube coating or paint according to the invention exhibits biocidal activity as shown in Figure 3B.

Figure 5 shows a series of scanning electron microscopy (SEM) images showing the surface of the metallic sheet coated with the carbon nanotube paint according to the invention (see Figure 5 (a)), and the appearance of *E*. *coli* cell cultures that were exposed to this coated metal (Figure 5 (b))

From these images (Figure 5 (b)), it is possible to deduce that the bacteria in contact with the coating or paint according to the invention undergo cell lysis with the collapse of the cell structure. Various abnormalities such as ghost-like appearance (flat and empty bacteria) and the collapse of the cell structure are observed, which is related to lysis of the cell membrane.

The lack of bactericidal action of the base used for coating or painting (and of steel) confirms that cell death is related to the presence of carbon nanotubes and not with the base used.

From the studies carried out, it is possible to conclude that the coating or paint according to the invention makes it possible to eliminate possible biofilm formations (biocidal effect), and thereby prevent biocorrosion; and at the same time, paralyzing the leaching or release of the metal present on the coated surface, protecting the environment in which it is located.

## Claims

1. Coating or paint composition, **CHARACTERIZED in that** it comprises:
i) Carbon nanotubes;
ii) ethylene glycol monobutyl ether; and
iii) nitrocellulose (cellulose nitrate).

2. A composition according to claim 1, **CHARACTERIZED in that** the carbon nanotubes concentration is between 5 and 10% weight/volume in an ethylene glycol monobutyl ether base.

3. A composition according to claim 1, **CHARACTERIZED in that** the carbon nanotubes are multiple wall type (MWCNTs).

4. A composition according to claim 1, **CHARACTERIZED in that** the nitrocellulose concentration is between 5 and 10% volume/volume based in the composition.

5. Process of preparing a coating or paint composition according to claim 1, **CHARACTERIZED in that** it comprises the following steps:
A) Preparing the carbon nanotubes; and
B) Incorporate the carbon nanotubes to the base coating or paint composition.

6. A process according to claim 5, **CHARACTERIZED in that** step A) comprises:
i) Preparing the catalyst for the synthesis of nanotubes, wherein the powder catalyst needed for the growth of the nanotubes is composed Al₂O₃, Fe₂(C₂O₄)x5H₂O, and Co(C₂H₃O₂)₂x4H₂O, being the ratio between the weights of the Fe, Co, and Al₂O₃ salts between 1:1:10 and 2:5:10, preferably between 2:2:10 and 2:4:10, using a calcination temperature between 600°C y 750°C
ii) allowing the growth of the carbon nanotubes, wherein this growth is performed by chemical vapor deposition (CVD) and is carried out at temperatures between 700°C and 800°C, using ethylene and argon with flows comprised between 100 y 500 sccm.

7. A process according to claim 5, **CHARACTERIZED in that** step B) comprises:
i) dispersing the carbon nanotubes using ultrasound in the ethylene glycol monobutyl ether solution, using a 20 kHz frequency to ensure a homogeneous distribution and the absence of agglomeration of nanotubes, where the dispersion times are between 15 to 60 minutes;
ii) incorporating the nitrocellulose to the previous solution.

8. A process according to claim 7, **CHARACTERIZED in that** the ultrasound frequency is of 20 kHz to ensure a homogeneous distribution and the absence of agglomeration of the carbon nanotubes.

9. A process according to claim 7, **CHARACTERIZED in that** the ultrasound is applied during a time between 15 to 60 minutes.

10. A process to avoid or decrease the biocorrosion on surfaces exposed to aqueous environments, **CHARACTERIZED in that** it comprises the following steps:
i) to apply the coating or paint composition according to claim 1 on the surface to protect;
ii) to dry the surface.

11. A process according to claim 10, **CHARACTERIZED in that** the drying step is carried out at room temperature for 4 hours.

12. A process according to claim 10, **CHARACTERIZED in that** the drying step is carried out at a temperature of 80°C for 5 minutes.

13. Use of the composition according to claim 1, **CHARACTERIZED in that** it is useful to protect surfaces avoiding or decreasing the formation of biofilms (biocorrosion).
